# EUROPÄISCHE PATENTSCHRIFT

(11) **EP 3 079 925 B1**
(45) Veröffentlichungstag und Bekanntmachung des Hinweises auf die Patenterteilung: **20.02.2019**
(21) Anmeldenummer: 14766707.5
(22) Anmeldetag: 16.09.2014
(51) Int. Cl.: B60C 11/13

(54) **FAHRZEUGLUFTREIFEN**
PNEUMATIC VEHICLE TIRE
PNEUS POUR VÉHICULES

(30) Priorität: 09.12.2013 DE 102013225299
(43) Veröffentlichungstag der Anmeldung: 19.10.2016
(73) Patentinhaber: Continental Reifen Deutschland GmbH, 30165 Hannover (DE)
(72) Erfinder: WIRTH, Christian, 31535 Neustadt am Rbge. (DE); DIENSTHUBER, Franz, 60528 Frankfurt (DE)
(74) Vertreter: Finger, Karsten
(86) Internationale Anmeldenummer: PCT/EP2014/069670
(87) Internationale Veröffentlichungsnummer: WO 2015/086182

(56) Entgegenhaltungen:
- EP-A1- 2 311 661
- JP-A- H07 186 623

## Beschreibung

Die Erfindung betrifft einen Fahrzeugluftreifen, insbesondere für den Einsatz unter winterlichen Fahrbedingungen, mit einem Laufstreifen, welcher zumindest zwei Blockreihen aufweist, die voneinander durch eine Umfangsrille getrennt sind und sich aus Blöcken zusammensetzen, die voneinander jeweils durch eine Querrille getrennt sind, wobei die Querrillen in der einen Blockreihe zumindest im Wesentlichen mit den Querrillen in der anderen Blockreihe fluchten, sodass jeweils zwei Blöcke der beiden Blockreihen einander zugeordnet sind und einander zugewandte Blockflanken aufweisen, wobei an der Laufstreifenperipherie die Blockkanten der Blockflanken der einander zugeordneten Blöcke gerade verlaufen, jeweils bezüglich einer bestimmten Umfangsrichtung einen größer werdenden gegenseitigen Abstand aufweisen und zur Umfangsrichtung gegensinnig geneigt unter einem spitzen Winkel verlaufen, wobei die Blockflanken über ihre Erstreckung in Umfangsrichtung ihre Neigung gegenüber der radialen Richtung kontinuierlich ändern, wobei die Blockflanken an den bezogen auf die Mittelumfangslinie der Umfangsrille weiter innen befindlichen Blockecken ihren kleinsten Winkel mit der radialen Richtung einschließen.

Ein derartiger Fahrzeugluftreifen ist beispielsweise aus der EP 2 311 661 A1 bekannt. Die Blockflanken, welche über ihre Erstreckung in Umfangsrichtung ihre Neigung gegenüber der radialen Richtung kontinuierlich ändern, schließen mit der radialen Richtung einen Winkel ein, der zwischen 10° und 45° variiert, wobei die Blockflanken an den bezogen auf die Mittelumfangslinie der Umfangsrille weiter innen befindlichen Blockecken ihren kleinsten Winkel mit der radialen Richtung einschließen.

Aus der EP 0 485 883 B1 ist ein PKW-Winterreifen mit einem Laufstreifen bekannt, welcher sich aus vier Blockreihen zusammensetzt, die durch eine gepfeilte Anordnung der zwischen ihnen verlaufenden Querrillen ein laufrichtungsgebunden gestaltetes Profil ergeben. Entlang der Äquatorlinie des Reifens verläuft eine Umfangsrille, die von Profilblöcken begrenzt ist, deren der Umfangsrille zugeordnete Blockkanten jeweils einen spitzen Winkel mit der Umfangsrichtung einschließen. Dieses bekannte, laufrichtungsgebunden gestaltete Blockprofil für PKW-Winterreifen soll vor allem gute Bremseigenschaften auf nasser Fahrbahn bieten und einen geringen und gleichmäßigen Abrieb aufweisen.

Aus der EP 0 713 790 B1 ist ein PKW-Winterreifen bekannt, dessen Laufstreifen schulterseitig jeweils eine Blockreihe aufweist, an die Richtung Laufstreifenmitte jeweils eine weitere Blockreihe anschließt. Zwischen jeder Schulterblockreihe und der zur Laufstreifenmitte hin anschließenden Blockreihe befindet sich eine Umfangsrille, die sich aus keilartig verlaufenden Rillenabschnitten zusammensetzt, sodass die diese Abschnitte begrenzenden Blockkanten mit der Mittelumfangslinie der Umfangsrille jeweils einen Winkel einschließen, der zwischen 2 ° und 15 ° beträgt. Dabei ist der Winkel, den die die keilartig verlaufenden Rillenabschnitte schulterseitig begrenzenden Blockkanten mit der Mittelumfangslinie der Umfangsrille einschließen, größer als der Winkel, den die keilartig verlaufenden Rillenabschnitte der gegenüberliegenden Blockkanten mit der Mittelumfangslinie einschließen. Derart gestaltete Laufstreifen sollen dem Reifen auf Schnee und Schneematsch ein Führungsverhalten verleihen, welches gegenüber Reifen, die im Wesentlichen gerade umlaufende Umfangsrillen aufweisen, verbessert ist.

Die Winterperformance eines PKW-Winterreifens wird vor allem durch die Fahreigenschaften des Reifens auf Nässe, Schnee oder Schneematsch und auf eisigem Untergrund bestimmt. Für eine gute Schnee- und Eisperformance ist es günstig, möglichst viele Griffkanten durch die Profilierung des Laufstreifens zur Verfügung stellen. Insbesondere bei Reifen mit einer Bodenaufstandsfläche, die deutlich kürzer als breit ist, ist es sinnvoll, den Laufstreifen mit ausgeprägten Umfangsrillen zu versehen, um die Verdrängungswege für Wasser über die vorhandenen Rillen möglichst kurz zu halten, sodass ein gutes Aquaplaningverhalten des Reifens sicher gestellt ist. Umfangsrillen reduzieren üblicherweise die zur Verfügung stehenden Griffkanten, sodass zwischen guten Aquaplaningeigenschaften und gutem Schnee- und Eisgriff ein gewisser Zielkonflikt besteht.

Der Erfindung liegt die Aufgabe zugrunde, diesen Zielkonflikt bei Reifen der eingangs genannten Art besser als bisher lösen bzw. zu entschärfen.

Gelöst wird die gestellte Aufgabe erfindungsgemäß dadurch, dass der Winkel der Blockflanken gegenüber der radialen Richtung an den weiter innen befindlichen Blockecken 0 ° bis 2 °, an den weiter außen befindlichen Blockecken 4 ° bis 12 ° beträgt.

Durch diese spezielle Ausgestaltung der Neigung der der Blockflanken bleibt die durch die zur Umfangsrichtung geneigten Blockkanten zur Verfügung stehende Griffkantenlänge, die für eine guten Schnee- und Eisgriff wichtig ist, erhalten, wobei gleichzeitig durch die spezielle Neigung der Blockflanken der Durchströmquerschnitt der Umfangsrille optimiert wird, was das Drainagevermögen der Umfangsrille und damit die Aquaplaning-Performance vorteilhaft beeinflusst. Insbesondere wird das Bilden von Verwirbelungen weitgehend verhindert.

In diesem Zusammenhang ist es auch von Vorteil, wenn die Blockflanken über gerundete Übergangsflanken in den Rillengrund der Umfangsrille übergehen. Bei schmalen Umfangsrillen wird die diesbezügliche Ausgestaltung derart getroffen, dass die Blockflanken am Rillengrund der Umfangsrille über eine einzige Übergangsrundung miteinander verbunden sind.

Eine weitere Maßnahme, die ein weitgehend ungehindertes Durchströmen der Umfangsrillen unterstützt und damit für die Aquaplaningeigenschaften des Laufstreifens von Vorteil ist, besteht darin, dass der Rillengrund in Umfangsrichtung von gerade verlaufenden Rillengrundgrenzabschnitten begrenzt ist, deren gegenseitiger Abstand analog zum gegenseitigen Abstand der Blockkanten größer wird, wobei die Winkel der Rillengrundgrenzabschnitte relativ zur Umfangsrichtung um mindestens 1 ° kleiner sind als die Winkel der Blockkanten zur Umfangsrichtung.

Die Schrägstellung der Blockkanten relativ zur Umfangsrichtung ist, wie an sich bekannt, für den Schnee- und Eisgriff von Vorteil, wobei der Winkel, den die Blockkanten mit der Umfangsrichtung einschließen, zwischen 2 ° und 8 ° betragen sollte.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf eine Teilabwicklung eines Umfangsbereiches eines Ausführungsbeispiels eines Laufstreifens für einen Fahrzeugluftreifen und
Fig. 2 eine Sicht in einen Abschnitt einer Umfangsrille.

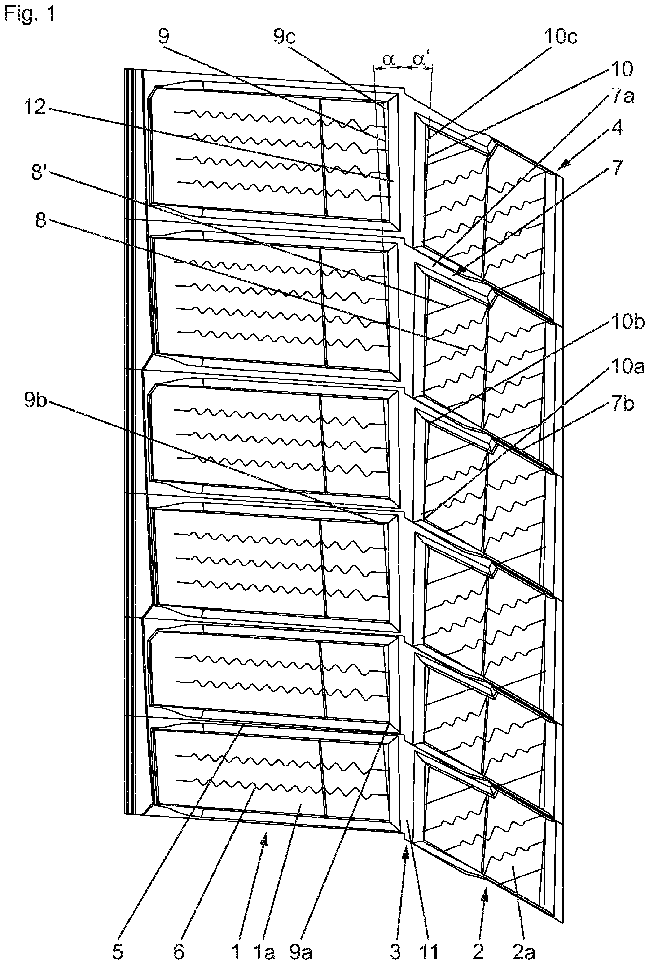

Fig. 1 zeigt von einem Laufstreifen für einen Fahrzeugluftreifen, insbesondere einen PKW-Winterreifen, zwei Blockreihen 1, 2, von welchen die eine schulterseitig verläuft. Eine Umfangsrille 3 trennt die schulterseitige Blockreihe 1 von der zweiten Blockreihe 2, an welche ebenfalls eine Umfangsrille 4 anschließt, die nur zum Teil dargestellt ist und welche die Blockreihe 2 von weiteren, nicht gezeigten Profilstrukturen - diese können Blockreihen oder Profilbänder, die in Umfangsrichtung umlaufen, sein - trennt. Die schulterseitige Blockreihe 1 setzt sich aus in Draufsicht im Wesentlichen parallelogrammförmigen Blöcken 1a zusammen, deren Erstreckung in der axialen Richtung des Reifens größer ist als jene in Umfangsrichtung. Die einzelnen Blöcke 1a sind in Umfangsrichtung voneinander durch zumindest im Wesentlichen in axialer Richtung und gerade verlaufenden Querrillen 5 voneinander getrennt. In jedem Block 1a ist eine Anzahl von schmalen Einschnitten 6 vorgesehen, die eine Breite von 0,4 mm bis 0,6 mm aufweisen, sich parallel zu den Querrillen 5 erstrecken und bei der gezeigten Ausführungsform, in Draufsicht betrachtet, einen wellenförmigen Verlauf aufweisen. In Folge der Ausgestaltung des Laufstreifens mit einer sogenannten Pitchfolge weisen die Blöcke 1a unterschiedliche Umfangslängen auf, bei der gezeigten Ausführungsform gibt es die Blöcke 1a mit drei unterschiedlichen Umfangslängen, wobei in Blöcken 1a mit der kleinsten Umfangslänge zwei Einschnitte 6 und in Blöcken 1a mit der größten Umfangslänge vier Einschnitte 6 verlaufen. Die Blockreihe 2 besteht aus einer Aneinanderreihung von Blöcken 2a, die ebenfalls in Draufsicht zumindest im Wesentlichen parallelogrammförmig gestaltet sind und voneinander durch Querrillen 7, die bei der gezeigten Ausführungsform unter einem spitzen Winkel von etwa 30 ° zur Querrichtung des Laufstreifens orientiert sind, getrennt sind. Bei der gezeigten Ausführungsform setzen sich die Querrillen 7 aus zwei Abschnitten 7a und 7b zusammen, wobei die Abschnitte 7a in die Umfangsrille 3 münden und breiter sind als die Abschnitte 7b, welche in die Umfangsrille 4 einmünden. Die Abschnitte 7a, 7b können unterschiedliche Tiefen aufweisen, wobei insbesondere die Tiefe der Abschnitte 7b geringer ist als jene der Abschnitte 7a.

Auch die Blöcke 2a sind jeweils mit einer Anzahl von Einschnitten 8, 8' versehen, die sich bei der gezeigten Ausführungsform gegensinnig zu den Querrillen 7 erstrecken und deren Anzahl pro Block 2a von der jeweiligen Pitchlänge, wie beschrieben, abhängt. Jeder Profilblock 2a besitzt beispielhaft Einschnitte 8, die gerade verlaufen, und Einschnitte 8', welche in Draufsicht in Wellenform verlaufen. Die gegenseitige Anordnung der Blockreihen 1, 2 ist derart, dass jeweils ein Block 1a im Wesentlichen neben einem Block 2a positioniert ist und die Querrillen 5, 7, die durch die Umfangsrille 3 voneinander getrennt sind, zumindest im Wesentlichen miteinander fluchten.

Die Blöcke 1a, 2a besitzen entlang der Umfangsrille 3 gerade verlaufende Blockkanten 9, 10, die zwischen Blockecken 9a, 10a und 9b, 10b verlaufen und mit der Umfangsrichtung kleine, spitze Winkel α, α' einschließen, welche 2 ° bis 8 ° betragen. Die paarweise einander zugeordneten bzw. gegenüberliegenden Blockkanten 9, 10 sind derart zur Umfangsrichtung orientiert, dass ihr gegenseitiger Abstand jeweils in die gleiche Umfangsrichtung größer wird. Nachdem sowohl die bezogen auf die Mittelumfangslinie der Umfangsrille 3 weiter innen befindlichen Blockecken 9a, 10a als auch die, bezogen auf die Umfangsrille 3, weiter außen befindlichen Blockecken 9b bzw. 10b sich jeweils auf einer einzigen in Umfangsrichtung gerade umlaufenden gedachten Linie befinden, variiert die Größe der Winkel α, α' geringfügig, je nachdem, ob sich die die Blöcke 1a, 2a in einem längeren oder einem kürzeren Pitch befinden.

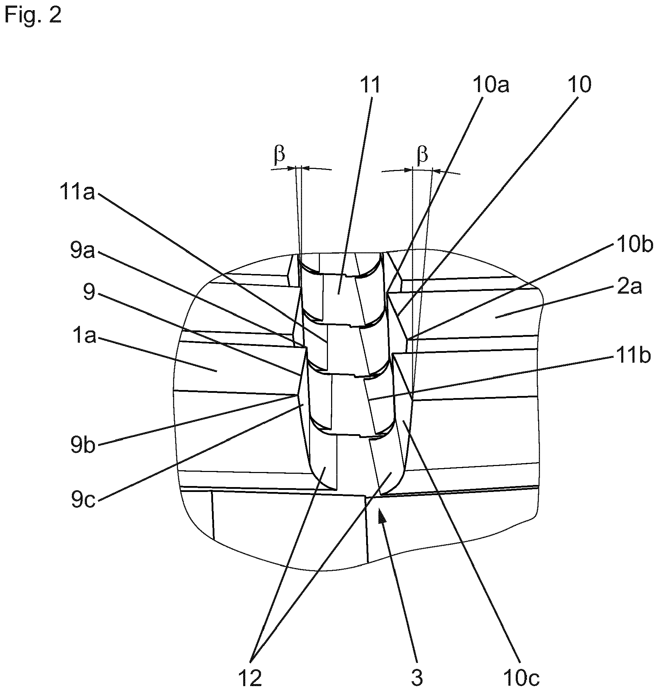

Von den Blockkanten 9 bzw. 10 verlaufen in Richtung Rillengrund Blockflanken 9c bzw. 10c, welche ebene Flächen sind und deren Neigung gegenüber der radialen Richtung, wie es insbesondere Fig. 2 zeigt, über ihre Erstreckung in Umfangsrichtung variiert. An die innen liegenden Blockecken 9a, 10a schließen die Blockflanken 9c, 10c mit der radialen Richtung einen Winkel β von 0 ° bis 2 °, insbesondere bis 1 °, ein, sie verlaufen daher in oder nahezu in radialer Richtung. In Richtung zu den äußeren Blockecken 9b, 10b ändert sich der Winkel β kontinuierlich, sodass der Winkel β der Blockflanken 9c, 10c an den äußeren Ecken 9b, 10b schließlich 4 ° bis 12 ° beträgt. Bezogen auf die Tiefe der Umfangsrille 3, welche bei der gezeigten Ausführungsform der maximalen Profiltiefe entspricht, reichen die Blockflanken 9c, 10c bis in eine Tiefe von mindestens 60 %, insbesondere von etwa 75 %, der Tiefe der Umfangsrille 3. Über gerundete Übergangsflanken 12 wird die Verbindung der Blockflanken 9c, 10c mit dem in Umfangsrichtung umlaufenden Rillengrund 11, welcher, im Querschnitt betrachtet, in axialer Richtung eine Gerade bildet, hergestellt. Bei der gezeigten Ausführungsform ist ferner der Rillengrund 11, analog zum Verlauf der Blockkanten 9, 10, in Umfangsrichtung mit Rillengrundgrenzabschnitten 11a, 11b versehen, deren gegenseitiger Abstand in Umfangsrichtung geringfügig größer wird. In Draufsicht betrachtet schließen daher die Rillengrundgrenzabschnitte 11a, 11b mit der exakten Umfangsrichtung sehr kleine, spitze Winkel γ ein, die um mindestens 1 ° kleiner sind als die Winkel α, α'.

Bei einer nicht dargestellten Ausführungsform können die Rillengrundgrenzabschnitte 11a, 11b auch exakt in Umfangsrichtung verlaufen und sich daher auf in Umfangsrichtung gerade verlaufenden, gedachten Linien befinden.

Bei einer alternativen Ausführungsform der Erfindung, die ebenfalls nicht dargestellt ist, kann, insbesondere bei schmal ausgeführten Umfangsrillen 3, vorgesehen sein, dass kein ausgeprägter Rillengrund 11 mehr gebildet ist, sondern lediglich eine einzige Übergangsrundung zwischen den beiden Rillenflanken 9c, 10c verläuft. Bei einer Ausführungsform der Erfindung werden die im Laufstreifen weiter außen befindlichen, eine Umfangsrille begrenzenden Blockflanken bevorzugt derart ausgeführt, dass ihr Winkel α relativ zur Umfangsrichtung größer ist als der Winkel α' der gegenüberliegenden Blockflanken. Diese Maßnahme trägt zu einer weiteren Verbesserung der Griffeigenschaften des mit einem derartigen Laufstreifen versehenen Reifens auf Schnee oder Schneematsch, insbesondere bei Kurvenfahrt, bei.

Je nach der Ausgestaltung des Laufstreifens können die erfindungsgemäßen Maßnahmen bei einer Umfangsrille oder bei mehreren Umfangsrillen getroffen sein.

### Bezugsziffernliste

- 1: Blockreihe
- 1a: Block
- 2: Blockreihe
- 2a: Block
- 3: Umfangsrille
- 4: Umfangsrille
- 5: Querrille
- 6: Einschnitt
- 7: Querrille
- 7a: Abschnitt
- 7b: Abschnitt
- 8: Einschnitt
- 8': Einschnitt
- 9: Blockkante
- 9a: Blockecke
- 9b: Blockecke
- 9c: Blockflanke
- 10: Blockkante
- 10a: Blockecke
- 10b: Blockecke
- 10c: Blockflanke
- 11: Rillengrund
- 11a: Rillengrundgrenzabschnitt
- 11b: Rillengrundgrenzabschnitt
- 12: Übergangsflanke
- α, α': Winkel
- β: Winkel
- γ: Winkel

## Patentansprüche

1. Fahrzeugluftreifen, insbesondere für den Einsatz unter winterlichen Fahrbedingungen, mit einem Laufstreifen, welcher zumindest zwei Blockreihen (1, 2) aufweist, die voneinander durch eine Umfangsrille (3) getrennt sind und sich aus Blöcken (1a, 2a) zusammensetzen, die voneinander jeweils durch eine Querrille (5, 7) getrennt sind, wobei die Querrillen (5) in der einen Blockreihe (1) zumindest im Wesentlichen mit den Querrillen (7) in der anderen Blockreihe (2) fluchten, sodass jeweils zwei Blöcke (1a, 2a) der beiden Blockreihen (1, 2) einander zugeordnet sind und einander zugewandte Blockflanken (9c, 10c) aufweisen, wobei an der Laufstreifenperipherie die Blockkanten (9, 10) der Blockflanken (9c, 10c) der einander zugeordneten Blöcke (1a, 2a) gerade verlaufen, jeweils bezüglich einer bestimmten Umfangsrichtung einen größer werdenden gegenseitigen Abstand aufweisen und zur Umfangsrichtung gegensinnig geneigt unter einem spitzen Winkel (α, α') verlaufen, wobei die Blockflanken (9c, 10c) über ihre Erstreckung in Umfangsrichtung ihre Neigung gegenüber der radialen Richtung kontinuierlich ändern, wobei die Blockflanken (9c, 10c) an den bezogen auf die Mittelumfangslinie der Umfangsrille (3) weiter innen befindlichen Blockecken (9a, 10a) ihren kleinsten Winkel (β) mit der radialen Richtung einschließen,
**dadurch gekennzeichnet,**
**dass** der Winkel (β) der Blockflanken (9c, 10c) gegenüber der radialen Richtung an den weiter innen befindlichen Blockecken (9a, 10a) 0 ° bis 2 °, an den weiter außen befindlichen Blockecken (9b, 10b) 4 ° bis 12 ° beträgt.

2. Fahrzeugluftreifen nach Anspruch 1, **dadurch gekennzeichnet, dass** die Blockflanken (9c, 10c) über gerundete Übergangsflanken (12) in den Rillengrund (11) der Umfangsrille (3) übergehen.

3. Fahrzeugluftreifen nach Anspruch 1, **dadurch gekennzeichnet, dass** die Blockflanken (9c, 10c) am Rillengrund der Umfangsrille über eine einzige Übergangsrundung miteinander verbunden sind.

4. Fahrzeugluftreifen nach einem der Ansprüche 1 bis 3, **dadurch gekennzeichnet, dass** der Rillengrund (11) in Umfangsrichtung von gerade verlaufenden Rillengrundgrenzabschnitten (11a, 11b) begrenzt ist, deren gegenseitiger Abstand analog zum gegenseitigen Abstand der Blockkanten (9a, 10a) größer wird, wobei die Winkel (γ) der Rillengrundgrenzabschnitte (11a, 11b) relativ zur Umfangsrichtung um mindestens 1 ° kleiner sind als die Winkel (α, α') der Blockkanten (9a, 10a) zur Umfangsrichtung.

5. Fahrzeugluftreifen nach einem der Ansprüche 1 bis 4, **dadurch gekennzeichnet, dass** die Blockkanten (9a, 10a) mit der Umfangsrichtung Winkel (α, α') einschließen, die 2 ° bis 8 ° betragen.

## Claims

1. Pneumatic vehicle tyre, in particular for use in winter driving conditions, with a tread, which has at least two rows of blocks (1, 2), which are separated' from one another by a circumferential groove (3) and are made up of blocks (1a, 2a), which are separated from one another in each case by a transverse groove (5, 7), wherein the transverse grooves (5) in the one row of blocks (1) are at least substantially in line with the transverse grooves (7) in the other row of blocks (2), so that in each case two blocks (1a, 2a) of the two rows of blocks (1, 2) are assigned to one another and have block flanks (9c, 10c) facing one another, wherein at the periphery of the tread the block edges (9, 10) of the block flanks (9c, 10c) of the blocks (1a, 2a) that are assigned to one another run in a straight line, respectively have an increasing mutual spacing with respect to a specific circumferential direction and run oppositely inclined in relation to the circumferential direction at an acute angle (α, α'), wherein the block flanks (9c, 10c) continuously change their inclination with respect to the radial direction over their extent in the circumferential direction, wherein the block flanks (9c, 10c) form their smallest angle (β) with the radial direction at the block corners (9a, 10a) located further inwards with respect to the central circumferential line,
**characterized**
**in that** the angle (β) of the block flanks (9c, 10c) with respect to the radial direction is 0° to 2° at the further inwardly located block corners (9a, 10a), and is 4° to 12° at the further outwardly located block corners (9b, 10b).

2. Pneumatic vehicle tyre according to Claim 1, **characterized in that** the block flanks (9c, 10c) go over into the groove base (11) of the circumferential groove (3) by way of rounded transitional flanks (12).

3. Pneumatic vehicle tyre according to Claim 1, **characterized in that** the block flanks (9c, 10c) are connected to one another at the groove base of the circumferential groove by way of a single transitional rounding.

4. Pneumatic vehicle tyre according to one of Claims 1 to 3, **characterized in that** the groove base (11) is delimited in the circumferential direction by straight-running groove-base delimiting portions (11a, 11b), the mutual spacing of which becomes greater in a way analogous to the mutual spacing of the block edges (9a, 10a), wherein the angle (γ) of the groove base delimiting portions (11a, 11b) relative to the circumferential direction are smaller by at least one degree than the angles (α, α') of the block edges (9a, 10a) in relation to the circumferential direction.

5. Pneumatic vehicle tyre according to one of Claims 1 to 4, **characterized in that** the block edges (9a, 10a) form with the circumferential direction angles (α, α') which are 2° to 8°.

## Revendications

1. Pneumatique pour véhicule, destiné en particulier à être utilisé dans des conditions de roulement hivernales, comprenant une bande de roulement qui comporte au moins deux rangées de blocs (1, 2) qui sont séparées l'une de l'autre par une rainure circonférentielle (3) et qui sont constituées de blocs (1a, 2a) qui sont séparés les uns des autres à chaque fois par une rainure transversale (5, 7), les rainures transversales (5) de l'une des rangées de blocs (1) étant alignées au moins sensiblement avec les rainures transversales (7) de l'autre des rangées de blocs (2) de manière à ce que deux blocs (1a, 2a) des deux rangées de blocs (1, 2) soient à chaque fois associés l'un à l'autre et comportent des flancs de bloc (9c, 10c) tournés l'un vers l'autre, les bords de bloc (9, 10) des flancs de blocs (9c, 10c) des blocs (1a, 2a) associés l'un à l'autre s'étendant de manière rectiligne sur la périphérie de la bande de roulement, les bords de bloc étant espacés l'un de l'autre d'une distance de plus en plus grande à chaque fois par rapport à une direction circonférentielle déterminée et s'étendant par rapport à la direction circonférentielle en étant inclinés dans des sens opposés avec un angle aigu (α, α'), les flancs de bloc (9c, 10c) changeant en permanence leur inclinaison par rapport à la direction radiale sur leur étendue dans la direction circonférentielle, les bords de blocs (9c, 10c) situés au niveau des coins de bloc (9a, 10a) se trouvant plus à l'intérieur par rapport à la ligne centrale circonférentielle de la rainure circonférentielle (3) formant leur plus petit angle (β) avec la direction radiale,
**caractérisé en ce que**
l'angle (β) des flancs de bloc (9c, 10c) par rapport à la direction radiale est compris entre 0° et 2° au niveau des coins de bloc (9a, 10a) se trouvant plus à l'intérieur, entre 4° et 12° au niveau des coins de bloc (9b, 10b) se trouvant plus à l'extérieur.

2. Pneumatique de véhicule selon la revendication 1, **caractérisé en ce que** les flancs de bloc (9c, 10c) se transforment, par le biais de flancs de transition arrondis (12), en le fond de gorge (11) de la rainure circonférentielle (3).

3. Pneumatique pour véhicule selon la revendication 1, **caractérisé en ce que** les flancs de bloc (9c, 10c) sont reliés les uns aux autres au fond de la rainure circonférentielle par un arrondi de transition unique.

4. Pneumatique pour véhicule selon l'une des revendications 1 à 3, **caractérisé en ce que** le fond de rainure (11) est délimité dans la direction circonférentielle par des parties limites de fond de rainure (11a, 11b) s'étendant de manière rectiligne, dont la distance mutuelle est plus grande de manière analogue à la distance mutuelle entre les bords de bloc (9a, 10a), l'angle (γ) des parties limites de fond de rainure (11a, 11b) par rapport à la direction circonférentielle étant inférieur d'au moins 1° à l'angle (α, α') des bords de bloc (9a, 10a) par rapport à la direction circonférentielle.

5. Pneumatique de véhicule selon l'une des revendications 1 à 4, **caractérisé en ce que** les bords de bloc (9a, 10a) forment avec la direction circonférentielle des angles (α, α') qui vont de 2° à 8°.
